# EUROPÄISCHE PATENTSCHRIFT

(11) **EP 0 908 718 B1**
(45) Veröffentlichungstag und Bekanntmachung des Hinweises auf die Patenterteilung: **12.02.2003**
(21) Anmeldenummer: 98116440.3
(22) Anmeldetag: 31.08.1998
(51) Int. Cl.: G01N 22/04

(54) **Mikrowellen-Streufeldsensor zur Feuchte- und /oder Dichtemessung**
Microwave stray field sensor for humidity / density measurements
Détecteur de champ de dispersion pour micro-ondes appliqué à la mesure de l'humidité ou de la densité

(30) Priorität: 16.09.1997 DE 29716639 U
(43) Veröffentlichungstag der Anmeldung: 14.04.1999
(73) Patentinhaber: TEWS Elektronik Dipl.-Ing. Manfred Tews, 22459 Hamburg (DE)
(72) Erfinder: Hermann,Rainer,Dipl.-Phys., 20253 Hamburg (DE); Zaage,Stefan,Dr.Dipl.-Ing., 30175 Hannover (DE)
(74) Vertreter: Glawe, Delfs, Moll & Partner

(56) Entgegenhaltungen:
- WO-A-91/12518
- GB-A- 2 166 873
- MESURES REGULATION AUTOMATISME., Bd. 50, Nr. 1, Januar 1985, Seiten 67-70, XP002057631 PARIS FR
- THOMPSON F: "MOISTURE MEASUREMENT USING MICROWAVES" MEASUREMENT AND CONTROL, Bd. 22, Nr. 7, September 1989, Seiten 210-215, XP000052731

## Beschreibung

Die Erfindung betrifft einen Mikrowellen-Streufeldsensor zur Feuchte- und/oder Dichtemessung von dielektrischen Stoffen gemäß dem Oberbegriff des Anspruchs 1.

Die Mikrowellenresonatortechnik bietet sowohl für die Anwendung unter Bedingungen des rauhen industriellen Prozesses als auch für die Serienmessung im Labor die Möglichkeit, schnell und präzise zu einer Aussage über die Feuchtigkeit und Dichte des zu untersuchenden Produktes zu gelangen. Dafür ist im wesentlichen die bei der Verwendung von Resonatoren anwendbare besondere Methode der Trennung des Einflusses von Feuchte und Dichte verantwortlich (EP 0 468 023).

Beim Resonatorverfahren wird in einem geeigneten metallischen Hohlraum eine stehende Mikrowelle erzeugt. Ein wesentliches Merkmal dieser Methode besteht darin, daß nicht nur die verlustlosen Auswirkungen der Wechselwirkung zwischen der Materialfeuchte und den Mikrowellen erfaßt werden, also alle Eigenschaftsveränderungen, die vom Realteil der Dielektrizitätskonstanten dominiert werden. Vielmehr ist es mit dem Resonatorverfahren auch möglich, die das Meßergebnis beeinflussenden Verluste an Mikrowellenleistung auf die Dämpfung im Produkt (Umwandlung in Wärme) zu begrenzen und damit Verfälschungen durch andere Verluste (Streuverluste an Oberflächen oder an grobkörnigen Streuzentren im Produkt, Abstrahlungsverluste, etc.) zu vermeiden. Wird ein feuchtes dielektrisches Material in den Resonator eingeführt, so verschiebt sich die Resonanzfrequenz, und die Breite der Resonanzkurve nimmt zu. Aus diesen Änderungen können, wie dies in der genannten Schrift ausgeführt wird, Dichte und Feuchtigkeit bestimmt werden.

Das Verfahren setzt voraus, daß ein mehr oder weniger geschlossener Resonator verwendet wird, aus dem keine Mikrowellenenergie entweichen kann. Geht nämlich durch die Abstrahlung Feldenergie verloren, so folgt daraus eine Verfälschung der Linienbreite und der Resonanzfrequenz, so daß Dichte und Feuchtigkeit nicht mehr bestimmt werden können.

Die Grenzen in der praktischen Anwendung von Hohlraumresonatoren werden dadurch gesetzt, daß das zu messende Produkt in das Probenrohr des Applikators gebracht werden muß. Das ist bei vielen Produkten jedoch nur in der Labor-Messung möglich, wenn Laborpersonal das Produkt manuell in den Probenapplikator füllt. In der Prozeßmessung kann bei Produkten mit gutem Fließ- oder Rieselverhalten eine Messung im Bypass erfolgen, indem Produkt aus dem Hauptstrom mit Hilfe von Förderelementen ausgeschleust, in das Meßrohr eingefüllt und anschließend in den Hauptstrom wieder zurückgefördert wird.

Für die Prozeßmeßtechnik ist es deshalb wünschenswert, als Erweiterung eine Meßeinrichtung zu entwickeln, die alle Vorteile des eingangs erwähnten Patentes eines dichteunabhängigen Resonatormeßverfahrens zur Feuchtemessung aufweist und gleichzeitig ohne Störung des Prozesses in den Hauptstrom des Produktflusses direkt eingebaut werden kann.

Es bereitet zwar keinerlei Schwierigkeiten, Mikrowellen aus Wellenleitern oder Hohlräumen in den freien Raum zu leiten, so daß die Mikrowellen auf großflächige Platten, einen Strom von Material bei einem industriellen Verfahren usw. auftreffen. Es erfolgt dabei aber eine antennenartige Abstrahlung von Mikrowellenenergie, die wie bereits erwähnt die Schiebung der Resonanzfrequenz und die Verbreiterung der Resonanzkurve bewirkt und damit das Meßergebnis verfälscht.

Bei einem vorbekannten offenen Streufeld-Resonator wird die stehende Welle durch eine auf einer Seite geöffnete Koaxialleitung erzeugt, wobei Resonatorfrequenz und Güte des Resonators duch ein Dielektrikum im Streufeld verändert werden (Mesures Regulation Automatisme., Bd. 50, Nr. 1, Januar 1985, Paris FR, Seiten 67-70, XP002057631). Der wesentliche Mangel dieser Anordnung besteht darin, daß diese Form des Streufeldes deutliches Abstrahlverhalten senkrecht zur Richtung des Koaxialleiters aufweist. Damit ist die wesentliche Voraussetzung nicht erfüllt, um die Messung der Verluste und der Resonanzfrequenzverschiebung zur Trennung von Feucht- und Materialdichte ausnutzen zu können. Auch die Schichtdicke der Probe, der Anpreßdruck zwischen Sensor und Probe, die Probenform usw. haben damit auf das Meßsignal einen störenden Einfluß.

Ein weiterer vorbekanter Sensor mit Streufeld am offenen Leitungsende eines Koaxialleiters soll zur Feuchtemessung verwendet werden (Thompson F: "Moisture Measurement Using Microwaves", Measurement and Control, Bd. 22, Nr. 7, September 1989, Seiten 210-215, XP000052731). Um das Problem der Abstahlung und damit der vielfältigen Störeinflüsse (Probenform usw.) einigermaßen in den Griff zu bekommen, wird das Streufeld auf "wenige Millimeter Eindringtiefe in die Probe" begrenzt. Auch dies erlaubt keine zuverlässigen und genauen Messungen zur Feuchte- und/oder Dichtemessung von Proben größerer Abmessungen.

Ein vorbekannter rotationssymmetrisch aufgebauter Mikrowellensensor weist einen Ring aus leitendem Material auf, der über einer leitenden Platte angeordnet ist (EP 0 288 135 B1). Zwischen ringförmigem Leiter und Platte befindet sich ein Dielektrikum. Eine solche Anordnung bildet einen kreisförmigen Streifenleiter. Dieser hat zwar eine geringere Abstrahlung als ein geradliniger Streifenleiter. Die Abstrahlung ist aber immer noch viel größer als in einem geschlossenen Mikrowellenresonator, der statt zwei Elektroden des Standes der Technik nur eine einzige Elektrode aufweist.

Die Aufgabe besteht in der Schaffung eines Streufeldsensors, bei dem zwar das Mikrowellenfeld im Raum vor einer gewissen Fläche auftritt, die unerwünschte antennenartige Abstrahlung praktisch aber nicht auftritt.

Erfindungsgemäß wurde durch Berechnungen und Versuche der Erfinder herausgefunden, daß dies bei einem Mikroweilen-Streufeldsensor des Oberbegriffs des Anspruchs 1 dadurch erreicht werden kann, daß dieser einen geschlossenen kreiszylindrischen, im Eₘ₁₀-Mode betriebenen Resonator aufweist, der eine dünne metallische, von einer mittigen Öffnung unterbrochene Stirnfläche aufweist und mit einem Dielektrikum gefüllt ist.

Es wird also ein im wesentlichen rotationssymmetrisches elektromagnetisches Wechselfeld in Form einer stehenden Welle erzeugt, bei dem die Wellenlänge am Ort der Erzeugung wesentlich geringer ist als im freien Raum. Durch diesen Unterschied in den Wellenlängen am Ort der Erzeugung des Wechselfelds und im freien Raum tritt der erfindungsgemäße Effekt auf, daß die Mikrowellen zwar eine gewisse Entfernung in den Raum eindringen, daß die Mikrowellenfeldstärke mit Abstand vom Streufeldsensor aber sehr stark abfällt, so daß praktisch keine Mikrowellenfeldstärke abgestrahlt wird. Dies beruht im wesentlichen darauf, daß es im Fernfeld zu einer Auslöschung infolge Interferenz kommt und nur das Nahfeld übrig bleibt.

Diese Wirkungen beruhen im wesentlichen darauf, daß der Mikrowellensensor ein Resonator ist, dessen Seitenwände im Gegensatz zum kreisförmigen Streifenleiter des Standes der Technik geschlossene metallische Seitenwände sind und der nur eine einzige Öffnung aufweist, aus der Mikrowellen austreten können. Die Mikrowellenkonfiguration ist dabei wegen des andersartigen Aufbaus aus leitenden. Elementen und Dielektrikum deutlich verschieden von derjenigen des kreisförmigen Streifenleiters des Standes der Technik und überraschend vorteilhaft.

Durch die Erfindung wird also ein Sensor geschaffen, der auch planar ausgebildet sein kann, der einerseits als Mikrowellenresonator ausgebildet ist und damit der Auswerteelektronik auf der Basis des beschriebenen Patentes zugänglich ist. Andererseits wird ein elektromagnetisches Feld über einer planaren Sensoroberfläche erzeugt, das in das zu vermessende Produkt hineinragt und solange keine Abstrahlungsverluste aufweist, wie die Dielektrizitätskonstante des Produktes unterhalb eines kritischen Grenzwertes liegt - der in der Praxis der industriell vorkommenden Produkte leicht eingehalten werden kann. Unter diesen Bedingungen entstehen die durch die planare Resonatortechnik gemessenen Verluste nicht durch Abstrahleffekte, sondern durch die Wärmeumwandlung innerhalb des Produktes - wie beim Hohlraumresonator. Damit ist die Messung von einer Seite an flächenhafte Materialien möglich, wie z.B. Holzplatten, Mauerplatten, etc. Auch ist die Messung durch Einbau in Behälterwandungen, Silos oder in dem laufenden Produktstrom innerhalb der Prozeßanlagen etc. möglich.

Der erfindungsgemäße sensor zeichnet sich dadurch aus, daß der Streufeldsensor einen kreiszylindrischen, im Eₘ₁₀-Mode betriebenen Resonator aufweist, der eine dünne metallische, von einer mittigen Öffnung unterbrochene Stirnfläche aufweist und mit einem Dielektrikum gefüllt ist. Dabei ist m=1,2,3,... die azimutale Modenkennzahl, 1 (= eins) die radiale Modenkennzahl und 0 (= null) die axiale Modenkennzahl. Ein solcher Mode weist 2 m Kreissegmente auf, in denen Feldlinien abwechselnd vom kürzesten Weg vom Boden zur Deckplatte und umgekehrt verlaufen. In radialer Richtung nimmt das Feld ausgehend von der Resonatormitte von Null an allmählich zu, übersteigt ein Maximum und wird am Resonatorrand wieder Null. Das Maximum des Feldes rückt mit zunehmender Modenkennzahl m immer weiter an den Wandfeldbereich des Resonators. Durch die Öffnung in der Stirnfläche treten die elektrischen Feldlinien aus dem Resonatorraum aus und schließen sich mit den Feldlinien im Öffnungsbereich eines benachbarten Kreissegments zu einem gekrümmten Feldlinienverlauf in den Raum hinein zusammen. Dieser Feldlinienverlauf ähnelt dem Feldlinienverlauf der kreisförmigen Stromresonanz. Hauptabstrahlrichtung ist, solange keine die Abstrahlung verhindernden Maßnahmen getroffen werden, die radiale Richtung parallel zur Stirnfläche.

Die relative Dielektrizitätskonstante des Dielektrikums wird man je nach Anwendungsfall unterschiedlich wählen. Sie sollte bei einer vorteilhaften Ausführungsform mindestens 2, bei einer weiteren Ausführungsform mindestens 5, bei noch einer weiteren Ausführungsform mindestens 10 betragen.

Vorteilhafterweise ist die räumliche Periode in Umfangsrichtung mindestens ungefähr 1,5 mal, noch vorteilhafter mindestens ungefähr 2,5 mal, bei anderen vorteilhaften Ausführungsformen mindestens ungefähr 3,5 mal kleiner als die Vakuumlänge.

Der erfindungsgemäße Streufeldsensor kann in einem weiten Bereich von Frequenzen angewendet werden, wobei selbstverständlich seine Abmessungen und gegebenenfalls die Dielelektrizitätskonstante an die Frequenz angepaßt werden müssen. Der erfindungsgemäße Streufeldsensor ist ohne weiteres in einem Bereich von 0,1 GHz bis über 20 GHz zu verwenden.

Die Erfindung wird im folgenden anhand von vorteilshaften Ausführungsformen unter Bezugnahme auf die beigefügten Zeichnungen beispielsweise beschrieben. Es zeigen:
- Fig. 1: in schematischer Darstellung eine Leiterschleife in Form eines Drahts;
- Fig. 2: die Mikrowellenfeldstärke als Funktion des Ortes beim Streufeldsensor der Fig. 1;
- Fig. 3: im Querschnitt eine Ausführungsform des erfindungsgemäßen Streufeldsensors; und
- Fig. 4: den Verlauf der Mikrowellenfeldlinien im Streufeldsensor der Fig. 3.

Es soll zunächst an einem einfachen Beispiel der prinzipielle Feldaufbau und die Wirkung eines kreisförmigen Leiters beschrieben werden.

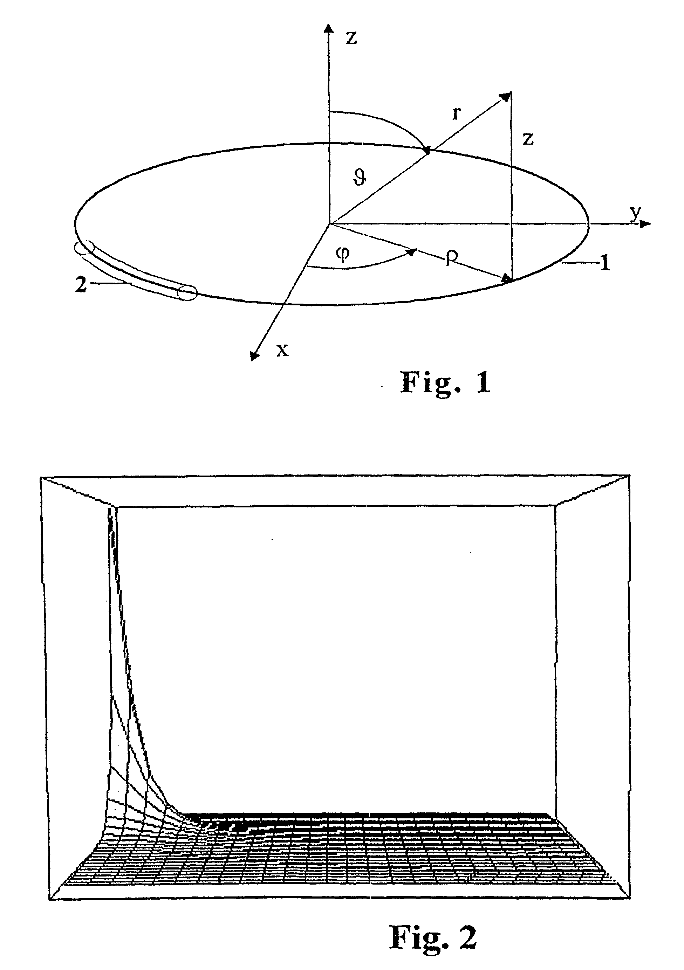

In Fig. 1 ist eine Drahtschlaufe 1 gezeigt, in der eine stehende elektromagnetische Welle erzeugt werden kann. Die Drahtschlaufe 1 ist von einem dünnen Dielektrikum umgeben, das bei 2 angedeutet ist. Aufgrund dieses Dielektrikums hat die Wellenlänge in der Stromschleife 1 einen kleineren Wert als im freien Raum. Die Mikrowellenfeldstärke, die sich bei dieser Anordnung ergibt, ist aus Fig. 2 ersichtlich. Die Intensität ist nach oben, die z-Achse nach rechts und die radiale Achse (x oder y) nach vorne aufgetragen. Wie man sieht, nimmt die Mikrowellenfeldstärke sehr schnell mit wachsender Entfernung z von der Drahtschlaufe 1 innerhalb der Abmessungen einer Wellenlänge ab. Es findet also keine nennenswerte Abstrahlung statt.

In Tabelle 1 sind die Ergebnisse von Berechnungen der Erfinder aufgeführt. Hier sind jeweils die kritischen Werte der Dielektrizitätskonstante ε für die verschiedenen Modenkennzahlen aufgetragen, für die die abgestrahlte Leistung unterhalb des Wertes von 0,01% der Abstrahlung des nackten metallischen Kreisleiters abgesenkt wird. In der letzten Spalte ist der Radius der Leiterschleife angegeben, der für die Realisierung einer Resonanzfrequenz von 2,5 GHz bei dem betreffenden Modus und dem kritischen Wert der Dielektrizitätskonstante zu wählen ist. m, die Modenkennzahl, ist dabei die Anzahl der Halbwellen auf dem Kreisleiter 1 der Fig. 1.

| **Moden-Kennzahl m** | **Effektive Dielektrizitätskonstante ε damit Abstrahlung <0,01%** | **Verkürzungs- Faktor gegen Vakuum- Wellenlänge (√ε)** | **maximaler Kreisradius für f=2,5 GHz** |
|---|---|---|---|
| 1 | 15625 | 125 | 0,15 mm |
| 2 | 141,7 | 11,9 | 3,2 mm |
| 3 | 31,9 | 5,65 | 10,1 mm |
| 4 | 15,0 | 3,87 | 19,7 mm |
| 5 | 9,5 | 3,08 | 31,0 mm |
| 6 | 7,0 | 2,65 | 43,3 mm |
| 7 | 5,6 | 2,37 | 56,5 mm |
| 8 | 4,7 | 2,17 | 70,5 mm |
| 9 | 4,1 | 2,02 | 84,9 mm |
| 10 | 3,7 | 1,92 | 99,3 mm |

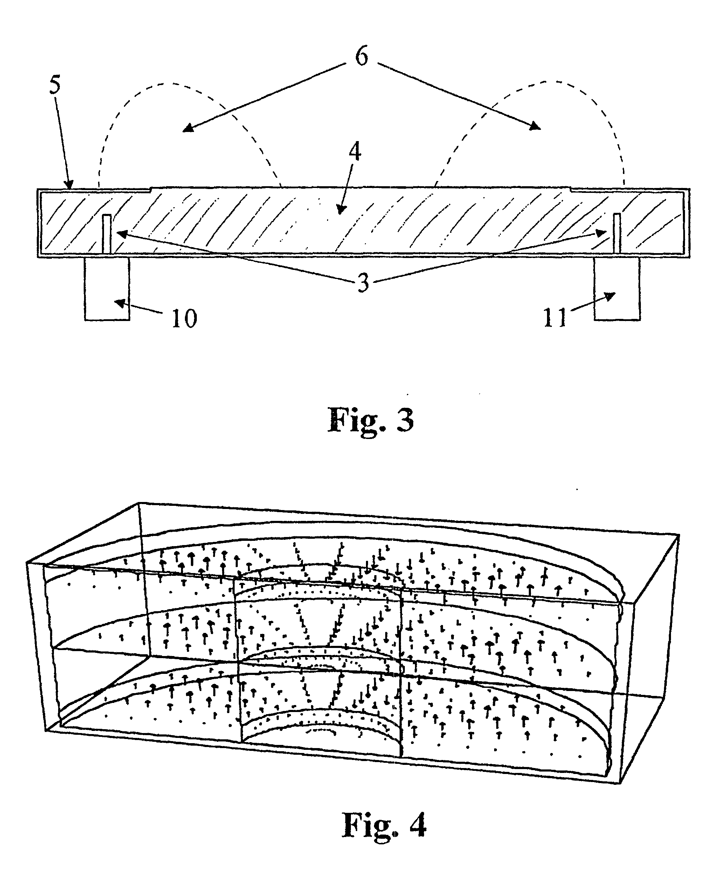

In Fig. 3 ist eine Ausführungsform des erfindungsgemäßen Streufeldsensors gezeigt. Dabei geschieht die Einkopplung 10 und Auskopplung 11 der Mikrowellen über Koaxialleitungen und kapazitiv wirksame Koppelstifte 3, die symmetrisch zur Resonatormitte im Abstand K so angebracht sind, daß sie einerseits unter der metallischen Abdeckung der Deckschicht und andererseits in der Nähe des Maximums des elektrischen Resonanzfeldes liegen. Den eigentlichen Resonator bildet der kreisrunde dielektrische Keramikkörper 4 mit Dielektrizitätskonstante ε, Durchmesser D, Schichtdicke s, und einer dünnen (d.h. mit einer Schichtdichte unter 0,1 mm gelegenen) Metallisierung 5 der den Keramikkörper überall begrenzt, mit Ausnahme der konzentrisch angebrachten Öffnung der Matallisierung in der Resonatordeckschicht (Durchmesser O). Darüber bildet sich die eigentliche Meßzone mit den skizzierten Streufeldbereichen aus 6.

Ein Beispiel für die praktische Umsetzung ist ein Sensor im Arbeitsbereich bis 4 GHz, mit dem die Resonanzmoden E₄₁₀, E₅₁₀, E₆₁₀, E₇₁₀, E₈₁₀ und E₉₁₀ in einer einzigen Bauform angeregt werden können. In diesem Falle ist D=145 mm, O=90 bis 120 mm (je nach Größe des gewünschten Streufeldes), s=3,2 mm, ε=9,2.

Technisch realisieren lassen sich Planarsensoren bis zu Keramikfüllungen von ε=100. Für höhere Werte der Dielektrizitätskonstanten liegen Minima und Maxima des Feldes bereits so dicht zusammen, daß die Antennenankopplungen bereits zu starke Inhomogenitäten im Resonatorraum erzeugen.

In Fig.4 ist der Feldlinienverlauf E₃₁₀ Resonanzmode eines entsprechenden geschlossenen kreiszylindrischen Resonators gezeigt. Durch die Öffnung der oberen Stirnfläche kann dann ein Feldlinienbild wie bei der ersten Ausführungsform des Kreisringleiters mit m=3 erzeugt werden.

## Patentansprüche

1. Mikrowellen-Streufeldsensor zur Feuchte- und/oder Dichtemessung an dielektrischen flächenhaften Materialien und Produktströmen,
der im wesentlichen rotationssymmetrisch ausgebildet ist, in axialer Richtung zu einer Seite hin für elektromagnetische Strahlung durchlässig ist, und in dem ein im wesentlichen rotationssymmetrisches Wechselfeld stehender Wellen erzeugt wird,
**dadurch gekennzeichnet, daß**
der Sensor einen kreiszylindrischen, im Eₘ₁₀-Modus betriebenen Hohlraum-Resonator aufweist, der mit einem Dielektrikum (4) gefüllt ist, so daß die räumliche Periode des Wechselfeldes in Umfangsrichtung kleiner ist als die Vakuumwellenlänge bei der Frequenz des Wechselfeldes, und
der Resonator eine dünne metallische, von einer mittigen Öffnung unterbrochene Stirnfläche (5) aufweist, vor der ein elektromagnetisches Nahfeld (6) erzeugt wird.

2. Mikrowellen-Streufeldsensor nach Anspruch 1, **dadurch gekennzeichnet, daß** die relative Dielektrizitätskonstante ε des Dielektrikums (2,4) mindestens 2 ist.

3. Mikrowellen-Streufeldsensor nach Anspruch 1, **dadurch gekennzeichnet, daß** die relative Dielektrizitätskonstante ε des Dielektrikums (2,4) mindestens 5 ist.

4. Mikrowellen-Streufeldsensor nach Anspruch 1, **dadurch gekennzeichnet, daß** die relative Dielektrizitätskonstante ε des Dielektrikums (2,4) mindestens 10 ist.

5. Mikrowellen-Streufeldsensor nach einem der Ansprüche 1 bis 4, **dadurch gekennzeichnet, daß** die azimutale Modenkennzahl m mindestens ungefähr 3 beträgt.

6. Mikrowellen-Streufeldsensor nach einem der Ansprüche 1 bis 4, **dadurch gekennzeichnet, daß** die azimutale Modenkennzahl m mindestens ungefähr 10 beträgt.

7. Mikrowellen-Streufeldsensor nach einem der Ansprüche 1 bis 6, **dadurch gekennzeichnet, daß** die räumliche Periode in Umfangsrichtung mindestens ungefähr 1,5 mal kleiner ist als die Vakuumwellenlänge.

8. Mikrowellen-Streufeldsensor nach einem der Ansprüche 1 bis 6, **dadurch gekennzeichnet, daß** die räumliche Periode in Umfangsrichtung mindestens ungefähr 2,5 mal kleiner ist als die Vakuumwellenlänge.

9. Mikrowellen-Streufeldsensor nach einem der Ansprüche 1 bis 6, **dadurch gekennzeichnet, daß** die räumliche-Periode in Umfangsrichtung mindestens ungefähr 3,5 mal kleiner ist als die Vakuumwellenlänge.

## Claims

1. A microwave stray field sensor for humidity and/or density measurement on areas of materials and product flows, which is basically formed with rotational symmetry, is permeable for electromagnetic radiation in the axial direction on one side, and in which an alternating field of standing waves having basically rotational symmetry is produced, **characterized by** the sensor having a circular cylindrical cavity resonator operated in the Em10 mode, which is filled with a dielectric (4), so that the spatial period of the alternating field is smaller in the circumferential direction than the vacuum wavelength at the frequency of the alternating field, and the resonator having a thin metallic end surface (5), interrupted by a centre opening, before which an electromagnetic close field (6) is produced.

2. A microwave stray field sensor according to claim 1, **characterised by** the relative dielectric constant e of the dielectric (2, 4) being at least 2.

3. A microwave stray field sensor according to claim 1, **characterised by** the relative dielectric constant e of the dielectric (2, 4) being at least 5.

4. A microwave stray field sensor according to claim 1, **characterised by** the relative dielectric constant e of the dielectric (2, 4) being at least 10.

5. A microwave stray field sensor according to one of the claims 1 to 4, **characterised by** the azimuthal mode number m being at least about 3.

6. A microwave stray field sensor according to one of the claims 1 to 4, **characterised by** the azimuthal mode number m being at least about 10.

7. A microwave stray field sensor according to one of the claims 1 to 6, **characterised by** the spatial period in the circumferential direction being at least about 1.5 times smaller than the vacuum wavelength.

8. A microwave stray field sensor according to one of the claims 1 to 6, **characterised by** the spatial period in the circumferential direction being at least about 2.5 times smaller than the vacuum wavelength.

9. A microwave stray field sensor according to one of the claims 1 to 6, **characterised by** the spatial period in the circumferential direction being at least about 3.5 times smaller than the vacuum wavelength.

## Revendications

1. Détecteur de champ de dispersion de micro-ondes pour la mesure de l'humidité et/ou de la densité de matériaux diélectriques étendus et de courants de produit, qui est sensiblement à symétrie de révolution, laisse passer un rayonnement électromagnétique dans la direction axiale, vers un côté, et dans lequel est produit un champ alternatif sensiblement à symétrie de révolution d'ondes stationnaires, **caractérisé en ce que** le détecteur comporte un résonateur à cavité cylindrique circulaire, fonctionnant en mode Eₘ₁₀, qui est rempli d'un diélectrique (4), ce qui fait que la période spatiale du champ alternatif dans la direction périphérique est inférieure à la longueur des ondes dans le vide à la fréquence du champ alternatif et **en ce que** le résonateur présente une face frontale (5) métallique mince, interrompue par une ouverture centrale, devant laquelle est produite un champ électromagnétique proche (6).

2. Détecteur de champ de dispersion de micro-ondes selon la revendication 1, **caractérisé en ce que** la constante diélectrique relative ε du diélectrique (2, 4) est au moins de 2.

3. Détecteur de champ de dispersion de micro-ondes selon la revendication 1, **caractérisé en ce que** la constante diélectrique relative ε du diélectrique (2, 4) est au moins de 5.

4. Détecteur de champ de dispersion de micro-ondes selon la revendication 1, **caractérisé en ce que** la constante diélectrique relative ε du diélectrique (2, 4) est au moins de 10.

5. Détecteur de champ de dispersion de micro-ondes selon l'une des revendications 1 à 4, **caractérisé en ce que** la caractéristique azimutale de mode m est au moins d'environ 3.

6. Détecteur de champ de dispersion de micro-ondes selon l'une des revendications 1 à 4, **caractérisé en ce que** la caractéristique azimutale de mode m est au moins d'environ 10.

7. Détecteur de champ de dispersion de micro-ondes selon l'une des revendications 1 à 6, **caractérisé en ce que** la période spatiale dans la direction périphérique est au moins environ 1,5 fois inférieure à la longueur d'onde à vide.

8. Détecteur de champ de dispersion de micro-ondes selon l'une des revendications 1 à 6, **caractérisé en ce que** la période spatiale dans la direction périphérique est au moins environ 2,5 fois inférieure à la longueur d'onde à vide.

9. Détecteur de champ de dispersion de micro-ondes selon l'une des revendications 1 à 6, **caractérisé en ce que** la période spatiale dans la direction périphérique est au moins environ 3,5 fois inférieure à la longueur d'onde à vide.
